# EUROPEAN PATENT SPECIFICATION

(11) **EP 2 357 376 B1**
(45) Date of publication and mention of the grant of the patent: **19.02.2020**
(21) Application number: 09827445.9
(22) Date of filing: 13.10.2009
(51) Int. Cl.: F16D 49/00, B60T 1/04, B61H 1/00, F16D 65/14, B61H 13/00, F16D 121/02, F16D 125/66

(54) **UNIT BRAKE**
BREMSE FÜR EINE EINHEIT
UNITÉ FREIN

(30) Priority: 18.11.2008 JP 2008294004
(43) Date of publication of application: 17.08.2011
(73) Proprietor: Nabtesco Corporation, Tokyo 102-0093 (JP)
(72) Inventor: ASANO, Yoshio, Kobe-shi Hyogo 651-2271 (JP); MORITA, Mitsumasa, Kobe-shi Hyogo 651-2271 (JP); OIE, Hideyuki, Kobe-shi Hyogo 651-2271 (JP)
(74) Representative: Cabinet Beau de Loménie
(86) International application number: PCT/JP2009/067714
(87) International publication number: WO 2010/058664

(56) References cited:
- EP-A2- 0 503 723
- DE-A1- 2 659 768
- JP-A- 5 147 510
- JP-A- 57 077 254
- JP-A- S59 192 665
- US-A- 4 650 040

## Description

### TECHNICAL FIELD

The present invention relates to a unit brake which is used for a railway vehicle or the like and brakes the rotation of a wheel by pressing a brake shoe onto the wheel.

### BACKGROUND ART

A conventional unit brake for braking the rotation of a wheel by pressing a brake shoe onto a wheel is described in Patent Document 1.

This unit brake includes a main body having a supply opening for supplying a pressure fluid, a pushing rod which protrudes to the outside of the main body and is connected to a shoe at the leading end, a supporting arm provided at the upper part of the main body, and a hanger whose one end is pinned to the supporting arm of the main body and the other end is supported by the leading end of the pushing rod.

According to this arrangement, the load on the pushing rod is reduced because the pushing rod is supported by the supporting arm via the hanger.

Patent Document 2 relates to a rail vehicle brake actuator with a brake block holder. Patent Document 3 relates to a block brake for rail vehicles. Patent Document 4 relates to a brake unit.

### [Patent Documents]

[Patent Document 1] Japanese Unexamined Patent Publication No. 59-192664
[Patent Document 2] European patent application No. EP 0 503 723 A2
[Patent Document 3] US Patent No. US 4 650 040 A
[Patent Document 4] Japanese Unexamined Patent Publication No. 59-192665

### DISCLOSURE OF THE INVENTION

### [Problem to be Solved by the Invention]

The unit brake of Patent Document 1, however, is arranged so that the supporting arm extends to reach above the pushing rod and the shoe in order to prevent the hanger, the supporting arm, and the shoe from interfering one another. Because of this arrangement, an interference with bogie-related components (such as components of the bogie and an air tube) which are provided above the shoe is likely to occur.

In particular, in case where a used unit brake is replaced with a new unit brake, it becomes necessary to replace the existing bogie-related components with new ones if an interference between the new unit brake and the existing bogie-related components occurs.

An object of the present invention in consideration of the problem above is to provide a unit brake which reduces the load on the pushing rod and restrains an interference with bogie-related components or the like which are provided above the unit brake.

### [Means for Solving the Problem]

A unit brake of the present invention has following features to achieve the object above. In other words, the unit brake of the present invention includes the following features singly or in combination.

The unit brake according to the first aspect of the present invention for achieving the object is presented in claim 1.

This arrangement makes it possible to support the shoe head by the supporting arm via the link component. The load on the pushing rod is therefore reduced. This arrangement also prevents the shoe head from tilting with respect to the pushing rod.

In addition to the above, since the supporting arm is provided below the pushing rod and the link component is provided between the supporting arm and the shoe head, the supporting arm and the link component are less likely to interfere with the bogie-related components or the like provided above the shoe head. Since the supporting arm is not provided at a position below the shoe head, it is also possible to prevent the supporting arm from contacting components on the ground side, when the vehicle runs.

Deleted

Deleted

According to another aspect of the present invention, the unit brake is arranged so that the extension portion is connected to the shoe head in such a way as to restrict, by friction, tilting of the shoe head with respect to the pushing rod.

According to this arrangement, the shoe head is tilted with respect to the pushing rod when a force larger than a predetermined friction force restricting the tilting of the shoe head is exerted to the shoe head. For this reason, even if at the time of braking a gap is formed between the wheel and the brake shoe because the angle of the braking surface of the brake shoe is improper, the angle of the shoe head is properly adjusted as below. In other words, as the shoe head is pushed toward the wheel by the pushing rod, a tilting force larger than the predetermined friction force is exerted to the shoe head, and hence the angle of the shoe head is automatically adjusted in a suitable manner. This causes the wheel to further closely contact the brake shoe at the time of braking.

Deleted

Deleted

According to another aspect of the present invention, the unit brake includes: an adjuster which is provided to move with the pushing rod inside the brake main body and has a supporting shaft which is orthogonal to advancing and withdrawing directions of the pushing rod; a roller rotatably attached to the supporting shaft; and a wedge-shaped component which is moved, by a driving mechanism provided inside the brake main body, in a direction orthogonal to the advancing and withdrawing directions of the pushing rod and to the supporting shaft, wherein, the wedge-shaped component has a tilted surface which is tilted with respect to the moving direction of the wedge-shaped component and biases, when moving toward the roller, the roller in the advancing direction of the pushing rod.

According to this arrangement, the mechanism for advancing and withdrawing the pushing rod is downsized in the direction orthogonal to the advancing and withdrawing directions of the pushing rod and to the supporting shaft.

According to another aspect of the present invention, the unit brake is arranged so that the supporting shaft is provided to vertically extend, and the supporting arms are connected to the link component at a position above the lower end of the supporting shaft.

According to this arrangement, since the supporting arm is not provided at a position lower than the lower end of the supporting shaft, it is possible to prevent the supporting arm from contacting components on the ground side, when the vehicle runs.

### [Effects of the Invention]

The present invention makes it possible to reduce the load on the pushing rod and restrains the interference of the supporting arm and the link component with the bogie-related components, because the shoe head is supported by the supporting arm via the link component.

### BRIEF DESCRIPTION OF THE DRAWINGS

Fig. 1 is a schematic partial cross section of a unit brake according to First Embodiment of the present invention.
Fig. 2 is a schematic cross section of the unit brake 1 taken along the S1-S1 line of Fig. 1.
Fig. 3 is a schematic cross section of the unit brake 1 taken along the S2-S2 line in Fig. 1.
Fig. 4 is an enlarged view of the friction generating mechanism of Fig. 3.
Fig. 5 is a schematic partial cross section of a unit brake according to Second Embodiment of the present invention.

### BEST MODE FOR CARRYING OUT THE INVENTION

The following will describe an embodiment of the present invention with reference to figures.

### (First Embodiment)

The present embodiment will describe, as an example, a unit brake used for braking the rotation of a wheel of a railway vehicle.

Hereinafter, a direction in parallel to the rotation axis of the wheel will be denoted as "vehicle width direction", a direction in parallel to the traveling direction of the vehicle will be denoted as "vehicle front-back direction", and a direction orthogonal to the vehicle width direction and the vehicle front-back direction will be denoted as "vehicle vertical direction".

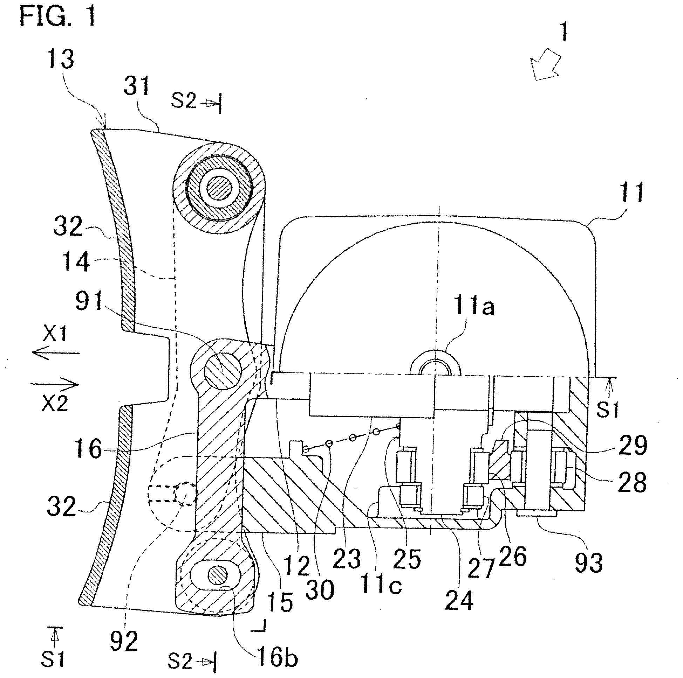

The unit brake 1 shown in Fig. 1 to Fig. 3 includes a box-shaped brake main body 11 having a supply opening 11a through which a pressure fluid is supplied and exhausted, a pushing rod 12 which is arranged to be able to move in and out to/from the brake main body 11, a shoe head 13 connected to the leading end of the pushing rod 12, a link component 14 connected to the shoe head 13, and supporting arms 15 which are provided to substantially horizontally protrude from the front surface of the brake main body 11 and connected to the link component 14. At the front surface of the shoe head 13 is attached a brake shoe (not illustrated) which contacts the tread of the wheel to brake the rotation of the wheel.

### <Supporting Mechanism of Shoe Head>

The pushing rod 12 is moved by a later described mechanism in the brake main body 11 in a direction toward the wheel (i.e. the direction indicated by the arrow X1 in Fig. 1) and in a direction away from the wheel (i.e. the direction indicated by the arrow X2 in Fig. 1).

The shoe head 13 includes a pair of side plates 31 which are in parallel to each other with a predetermined interval therebetween and an arc-shaped front plate portion 32 connected to the front edges of the pair of side plates . The front plate portion 32 is divided into an upper portion and a lower portion. The leading end portion of the pushing rod 12 in its advancing direction is disposed between the pair of side plates 31, and a shoe head pin 91 extending in the vehicle width direction penetrates the pair of side plates 31 and the leading end portion of the pushing rod 12. With this arrangement, the shoe head 13 is connected to the pushing rod 12 to be rotatable about the shoe head pin 91.

The pushing rod 12 is provided with a downward-extending extension plate 16 (extension portion) at the leading end portion in the advancing direction. The extension plate 16 is integrated with the pushing rod 12. This plate 16 extending downward forms an angle of about 90 degrees with the pushing rod 12.

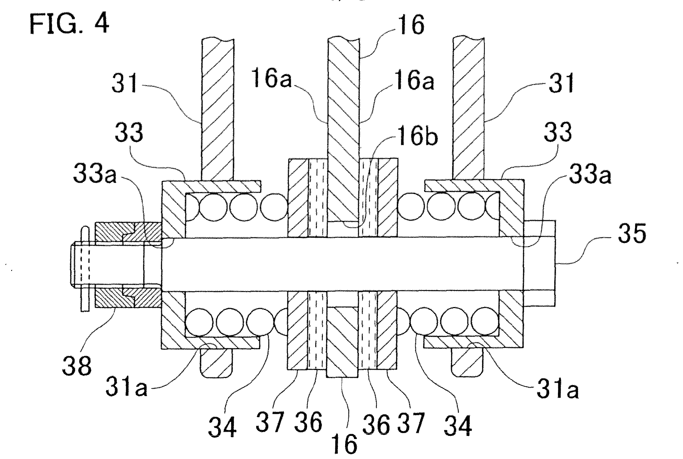

As the enlarged view in Fig. 4 shows, the lower end portion of the extension plate 16 has surfaces 16a which are in parallel to the advancing and withdrawing directions of the pushing rod 12. This lower end portion of the extension plate 16 is disposed between the pair of side plates 31 of the shoe head 13. Furthermore, at the lower end portion of the extension plate 16 is formed a long hole 16b which extends in the substantially same direction as the rotation of the shoe head 13 (see Fig. 1) .

Through the side plates 31 of the shoe head 13 sandwiching the long hole 16b, concentric holes 31a are formed, respectively. To these concentric holes 31a, a spring box 33 is inserted to be slidable in the axial directions. Inside the spring box 33 is provided a coil spring 34. Into a center hole 33a of the spring box 33 is inserted an attaching bolt 35. By tightening a double nut 38, the spring box 33 is shortened crosswise.

Between the parallel surfaces 16a of the extension plate 16 and washers 37, friction plates 36 are interposed. To these washers 37, a biasing force is exerted inward from the coil springs 34. The friction plates 36 and the washers 37 are supported by the attaching bolt 35 penetrating the long hole 16b. It is therefore possible to adjust the force with which the friction plates 36 presses the extension plate 16, by changing the degree of tightening of the double nut 38.

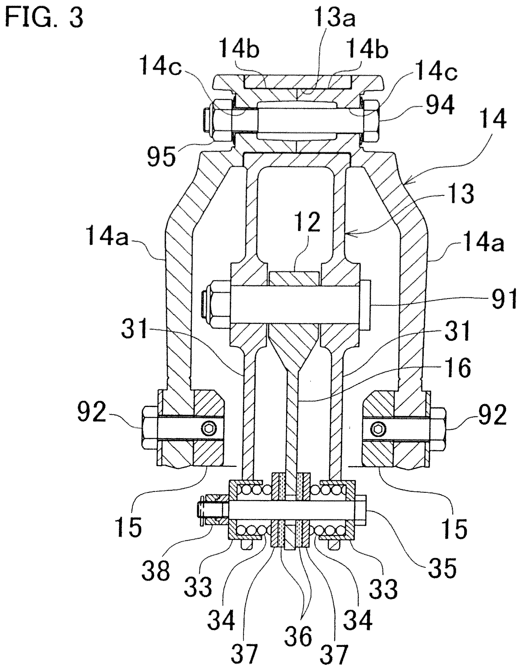

As shown in Fig. 3, the upper end portion of the link component 14 is connected to the upper end portion of the shoe head 13 to be rotatable about an axis in parallel to the shoe head pin 91.

More specifically, the link component 14 has a pair of plate members 14a which are provided to sandwich the shoe head 13 and vertically extend. The pair of plate members 14a have, at the upper ends, axis components 14b which protrude in the vehicle width direction. In the meanwhile, at the upper end of the shoe head 13 is formed a through hole 13a penetrating plate members 14a in the vehicle width direction. The pair of plate members 14a are arranged so that the respective axis components 14b are inserted into the through hole 13a of the shoe head 13 from the respective sides . While the leading ends of the axis components 14b are brought into contact each other, the shaft of a connection bolt 94 is inserted into the through holes 14c which are concentric with the shaft center of the axis components 14b, and the axis components 14b are connected to each other by being sandwiched by the head of the connection bolt 94 and a nut 95 from the respective sides. As such, the link component 14 is connected to the shoe head 13 to be rotatable about the axis components 14b.

As shown in Fig. 1 to Fig. 3, the brake main body 11 has, in an integrated manner, a pair of supporting arms 15 which protrude in the advancing direction of the pushing rod 12. The pair of supporting arms 15 are provided on the respective sides of the shoe head 13 in the width directions, at the lower end portion of the brake main body 11. The pair of supporting arms 15 are connected via link pins 92 to the lower end portions of the pair of plate members 14a of the link component 14 so that the supporting arms 15 are rotatable. The link pins 92 are arranged to be in parallel to the shoe head pin 91.

The pair of supporting arms 15 are provided above the ends of the attaching bolt 35 which is at the lower end portion of the shoe head 13.

### <Driving Mechanism in Brake Main Body>

The unit brake 1 includes, in the brake main body 11, a piston 21 arranged to be movable in the vehicle width direction, a spring 22 biasing the piston 21 toward the supply opening 11a, an adjuster 25 which is provided on the pushing rod 12 and has a pair of supporting shafts 24 vertically protruding both upward and downward, first rollers 26 and second rollers 27 rotatably attached to the pair of supporting shafts 24, third rollers 28 attached to the brake main body 11 behind the first rollers 26 to oppose the first rollers 26, a pair of wedge-shaped components 29 fixed to the piston 21, and a spring 30 biasing the adjuster 25 in the withdrawing direction (indicated by the arrow X2) of the pushing rod 12. The adjuster 25 is attached to the pushing rod 12 in the brake main body 11 via a sleeve 23, and advances and withdraws with the pushing rod 12.

Each of the wedge-shaped components 29 is fixed to the piston 21 on the base end side and is arranged so that its tapered leading end portion is inserted into the space between the first roller 26 and the third roller 28. The wedge-shaped component 29 has a counteraction surface 29a substantially in parallel to the vehicle width direction and an operating surface 29b tilted with respect to the counteraction surface 29a. The wedge-shaped components 29 are paired in the vehicle vertical direction.

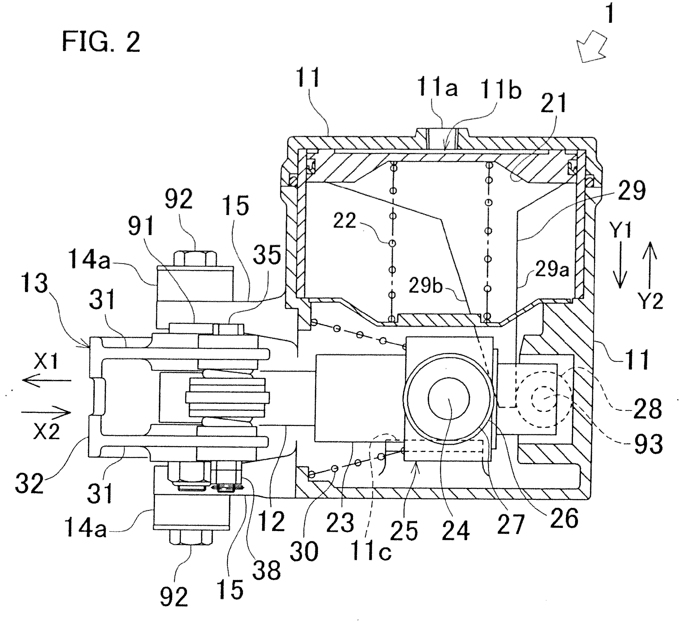

The piston 21 moves in such a way as to insert the leading end of the wedge-shaped component 29 into the space between the first roller 26 and the third roller 28, as a pressure fluid is supplied from the supply opening 11a to the pressure chamber 11b of the brake main body 11. In other words, the piston 21 moves in the direction indicated by the arrow Y1 in Fig. 2 (hereinafter, this direction will be referred to as "braking direction"). The spring 22 biases the piston 21 in the direction opposite to the braking direction (i.e. in the direction indicated by the arrow Y2 in Fig. 2).

The second roller 27 is provided at the end portion of the supporting shaft 24 of the adjuster 25. The first roller 26 is provided to be closer to the sleeve 23 than the second roller 27. The third roller 28 is rotatably attached to the brake main body 11 via a vertically extending roller pin 93.

The brake main body 11 is provided with a guide 11c. The second roller 27 contacts the guide 11c and rotationally moves thereon. The guide 11c is on the opposite side of the piston 21 from the second roller 27. It is noted that a surface of the guide 11c contacting the second roller 27 is orthogonal to the moving direction of the piston 21.

### <Operation of Unit Brake>

Now, how the unit brake 1 operates will be described.

When braking, as a pressure fluid is supplied from the supply opening 11a to the pressure chamber 11b, the piston 21 and the wedge-shaped components 29 move toward the adjuster 25 (i.e. move in the direction indicated by the arrow Y1).

At the same time, the first rollers 26 contacting the operating surfaces 29b of the wedge-shaped components 29 are pushed forward (i.e. in the direction indicated by the arrow X1), with the result that the adjuster 25, the sleeve 23, and the pushing rod 12 move forward. In so doing, the second rollers 27 move forward while contacting the guide 11c and rotating. As a result, the shoe head 13 at the front end of the pushing rod 12 move toward the tread of the wheel.

At the same time, the shoe head 13 moving toward the tread of the wheel is slightly moved in the vertical direction on account of the rotation about the link pins 92 which are at the lower end of the link component 14.

It is noted that, since the pushing rod 12 is connected to the sleeve 23 via an unillustrated ball bearing, the leading end of the pushing rod 12 is allowed to circularly move in the vertical direction.

In addition to the above, the rotation of the shoe head 13 about the shoe head pin 91 is restricted by the friction force of the friction plate 36 which is provided between the extension plate 16 extending from the pushing rod 12 and the lower end portion of the shoe head 13. For this reason, the tilting angle of the shoe head 13 with respect to the pushing rod 12 is unchanged until the brake shoe contacts the wheel.

As the brake shoe of the shoe head 13 contacts the tread of the wheel, the rotation of the wheel is braked.

When the brake shoe and the wheel are not equidistant from each other at the time of the contact of the brake shoe to the tread of the wheel, one of the upper and lower edges of the shoe head 13 is loaded. When the loaded force exceeds the friction force between the extension plate 16 and the friction plate 36, the shoe head 13 rotates about the shoe head pin 91 so that the tread of the wheel closely contacts the brake shoe.

The pushing rod 12 is pulled back when the brake is released. However, the shoe head 13 is pulled back while keeping the position after the rotation, on account of the friction force of the friction plate 36.

As described above, the unit brake 1 includes: the pushing rod 12 arranged to be able to move in and out to/from brake main body 11; the shoe head 13 which is rotatably connected to the leading end portion of the pushing rod 12 in the advancing direction and to which the brake shoe which contacts the wheel to brake the rotation of the wheel is attached; the link component 14 which is provided, at a position above the junction between the shoe head 13 and the pushing rod 12, to be rotatable about an axis substantially in parallel to the rotation axis about which the shoe head 13 rotates with respect to the pushing rod 12; and the supporting arms 15 which are provided, at positions below the junction between the shoe head 13 and the pushing rod 12 in the brake main body 11, to be rotatable about an axis substantially in parallel to the rotation axis about which the link component 14 rotates with respect to the pushing rod 12 of the shoe head 13.

According to this arrangement, the shoe head 13 is supported by the supporting arms 15 via the link component 14. That is to say, since a part of the vertical force exerted to the shoe head 13 is transferred to the supporting arms 15 via the link component 14, it is possible to reduce the vertical force transferred from the shoe head 13 to the pushing rod 12. As such, the load on the pushing rod 12 is reduced.

In addition to the above, the supporting arms 15 are provided below the pushing rod 12, the link component 14 is provided between the supporting arms 15 and the shoe head 13, and the link component 14 does not protrude above the upper end of the shoe head 13. Because of this arrangement, the supporting arms 15 and the link component 14 are less likely to interfere with the bogie-related components or the like, which are provided above the shoe head 13.

In addition to the above, the extension plate 16 is integrated with the pushing rod 12 and connected to the shoe head 13 at a position distant from the junction between the shoe head 13 and the pushing rod 12. This prevents the shoe head 13 from tilting with respect to the pushing rod 12.

It is noted that the effect above is achieved not only when the connection between the extension plate 16 and the shoe head 13 is made via the friction plate 36 but also when the connection is achieved by using a pin or the like.

The extension plate 16 is connected to the shoe head 13 to restrict, by a friction force, the tilting of the shoe head 13 with respect to the pushing rod 12.

According the this arrangement, the shoe head 13 rotates about the shoe head pin 91 with respect to the pushing rod 12, when a force larger than a predetermined friction force exerted from the extension plate 16 and by which the tilting of the shoe head 13 is restricted is exerted to the shoe head 13. For this reason, even if at the time of braking a gap is formed between the wheel and the brake shoe because the angle of the braking surface of the brake shoe is improper, the angle of the shoe head 13 is properly adjusted as below.

That is to say, as the shoe head 13 is pushed toward the wheel and only the upper or lower side of the brake shoe contacts the tread of the wheel, the shoe head 13 receives a rotational force about the shoe head pin 91. This rotational force automatically adjusts the angle of the shoe head 13 so that the brake shoe evenly contacts the tread of the wheel with a suitable angle, against the predetermined friction force generated between the friction plate 36 and the extension plate 16. This causes the wheel to further closely contact the brake shoe at the time of braking.

In addition to the above, since the supporting arms 15 are provided above the junction between the extension plate 16 and the shoe head 13, it is possible to prevent the supporting arms 15 from contacting components provided on the ground side, when the vehicle runs.

In addition to the above, even if the connecting members (attaching bolt 35 or the like) by which the extension plate 16 is connected to the shoe head 13 protrude from the profile of the shoe head 13 toward the outside in the vehicle width direction, it is possible to reduce the distance between the two supporting arms 15 in the vehicle width direction because the supporting arms 15 are provided at the upper part to avoid the positions of the connecting members.

This makes it possible to prevent the mechanism for supporting the shoe head 13 from being excessively large in the vehicle width direction.

In addition to the above, the unit brake 1 includes, in the brake main body 11, the adjuster 25 which advances and withdraws with the pushing rod 12 and has the supporting shafts 24 extending in the directions orthogonal to the advancing and withdrawing directions of the pushing rod 12, the first rollers 26 rotatably attached to the supporting shafts 24, the piston 21 which is provided in the brake main body 11 and moves in the direction orthogonal to the advancing and withdrawing directions of the pushing rod 12 and to the supporting shaft against the biasing force of the spring 22 when a pressure fluid is supplied from the supply opening 11a to the pressure chamber 11b, and the wedge-shaped components 29 fixed to the piston 21. Each of the wedge-shaped components 29 has the operating surface 29b tilted with respect to the moving direction of the wedge-shaped components 29. When the wedge-shaped components 29 move toward the first rollers 26 with the piston 21, the operating surfaces 29b bias the first rollers 26 in the advancing direction of the pushing rod 12.

According to this arrangement, the mechanism for advancing and withdrawing the pushing rod 12 is downsized in the direction orthogonal to the advancing and withdrawing directions of the pushing rod 12 and to the supporting shafts 24.

In addition to the above, since the supporting shafts 24 are arranged to vertically extend, the mechanism for advancing and withdrawing the pushing rod 12 is downsized in the vehicle width direction.

In addition to the above, since the supporting arms 15 are connected to the link component 14 at positions above the lower ends of the supporting shafts 24, it is possible to prevent the supporting arms 15 from contacting components provided on the ground side, when the vehicle runs.

It is noted that the supporting shafts 24 are housed in the brake main body 11 and move within a predetermined range inside the brake main body 11. For this reason, a space in front of the position where the supporting shafts 24 are closest to the shoe head 13 (hereinafter, the most advanced position) is likely to be a dead space.

In this regard, the supporting arms 15 connected to the link component 14 at positions higher than the lower end of the supporting shaft 24 are provided in front of the most advanced position of the supporting shafts 24. In this way, highly rigid supporting arms 15 are formed by effectively using the dead space.

In addition to the above, the present embodiment is arranged so that the link component 14 is connected to the upper end portion of the shoe head 13. This restrains the vertical movement of the shoe head 13 which occurs in accordance with the movement of the pushing rod 12.

In addition to the above, the present embodiment is arranged so that the extension plate 16 is connected to the lower end portion of the shoe head 13. As such, because the extension plate 16 is connected at the most distant part of the shoe head 13 from the shoe head pin 91, the tilting of the shoe head 13 is restricted by a relatively small force.

### (Second Embodiment)

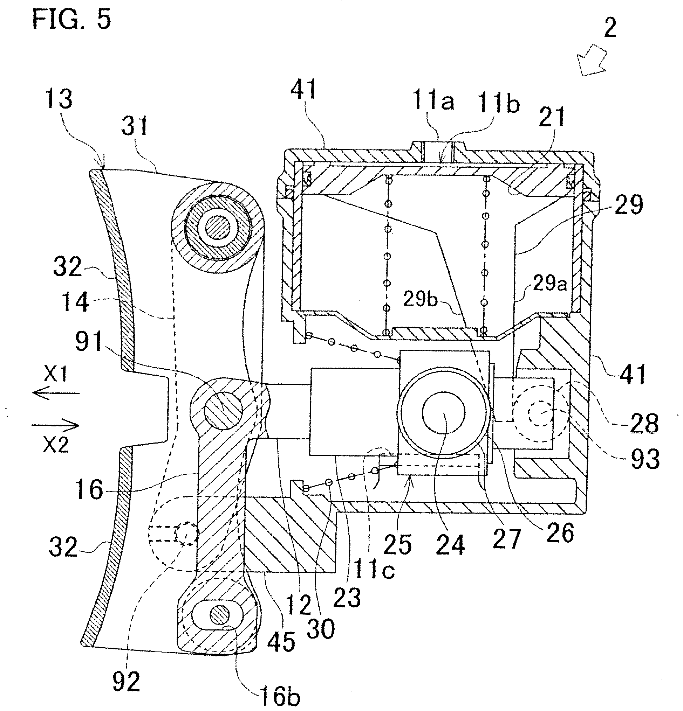

The following will describe a unit brake 2 of Second Embodiment with reference to Fig. 5. It is noted that the same components as in First Embodiment are denoted by the same reference numerals, respectively, and the description thereof will be omitted.

In the unit brake 2, the directions of the brake main body 41 and the mechanism therein are different from those in First Embodiment.

More specifically, the unit brake 2 is arranged so that a supply opening 11a is formed at the upper end portion of a brake main body 41, and the piston 21 and the wedge-shaped component 29 move in the vehicle vertical direction.

The supporting shafts 24 of the adjuster 25 extend in the vehicle width direction.

The supporting arm 45 is arranged to extend forward from the corner between the front surface and lower end surface of the brake main body 41, and its leading end is connected to the lower end portion of the link component 14.

The shoe head 13 is positioned so that its upper end is lower than the upper end of the brake main body 41.

According to this arrangement, the space occupied by the brake main body 41 is downsized in the vehicle width direction.

While illustrative and presently preferred embodiments of the present invention have been described in detail herein, it is to be understood that the inventive concepts may be otherwise variously embodied and employed within the scope of claims.

### REFERENCE NUMERALS

- 1 and 2: UNIT BRAKE
- 11: BRAKE MAIN BODY
- 12: PUSHING ROD
- 13: SHOE HEAD
- 14: LINK COMPONENT
- 15: SUPPORTING ARM
- 16: EXTENSION PLATE (EXTENSION PORTION)
- 24: SUPPORTING SHAFT
- 25: ADJUSTER
- 26: FIRST ROLLER
- 29: WEDGE-SHAPED COMPONENT

## Claims

1. A unit brake (1, 2) comprising:
a pushing rod (12) which is arranged to move in and out to and from a brake main body (11, 41);
a shoe head (13) which is rotatably connected to a leading end portion of the pushing rod (12) in an advancing direction and to which a brake shoe which contacts a wheel to brake the rotation of the wheel is attached;
a link component (14) which is connected to the shoe head (13) , **characterised in that**:
the unit brake (1, 2) further comprises an extension portion (16) which is integrated with the pushing rod (12) and is connected with the shoe head (13) at a position remote from the junction between the shoe head (13) and the pushing rod (12);
the link component (14) is connected to the shoe head (13) at a position above a junction between the shoe head (13) and the pushing rod (12) to be rotatable about an axis which is substantially in parallel to a rotation axis about which the shoe head (13) rotates with respect to the pushing rod (12);
the unit brake (1, 2) further comprises a pair of supporting arms (15, 45) which are connected in an integrated manner to the brake main body (11, 41) to substantially horizontally protrude from a front surface of the brake main body (11, 41) or from a corner between the front surface and a lower end surface of the brake main body (11, 41) at a position below the junction between the shoe head (13) and the pushing rod (12), are provided on both sides of the shoe head (13) in a width direction, and are connected to a lower end portion of the link component (14) so that the link component (14) is rotatable; and
the supporting arms (15, 45) are provided above the junction between the extension portion (16) and the shoe head (13) .

2. The unit brake (1, 2) according to claim 1, wherein,
the extension portion (16) is connected to the shoe head (13) in such a way as to restrict, by friction, tilting of the shoe head (13) with respect to the pushing rod (12).

3. The unit brake (1, 2) according to any one of claims 1 or 2, further comprising:
an adjuster (25) which is provided to move with the pushing rod (12) inside the brake main body (11, 41) and has a supporting shaft (24) which is orthogonal to advancing and withdrawing directions of the pushing rod (12);
a roller (26, 27) rotatably attached to the supporting shaft (24); and
a wedge-shaped component (29) which is moved, by a driving mechanism provided inside the brake main body (11, 41), in a direction orthogonal to the advancing and withdrawing directions of the pushing rod (12) and to the supporting shaft (24), wherein,
the wedge-shaped (29) component has an operating surface (29b) which is tilted with respect to the moving direction of the wedge-shaped component (29) and biases, when moving toward the roller (26, 27), the roller (26, 27) in the advancing direction of the pushing rod (12).

4. The unit brake (1) according to claim 3, wherein,
the supporting shaft (24) is provided to vertically extend, and
the supporting arms (15) are connected to the link component (14) at a position above the lower end of the supporting shaft (24).

## Patentansprüche

1. Bremseinheit (1, 2), umfassend:
eine Schubstange (12), die dafür ausgelegt ist, sich in einen Bremshauptkörper (11, 41) hinein und aus ihm heraus zu bewegen,
einen Bremsbackenkopf (13), der drehbar mit einem Vorderendabschnitt der Schubstange (12) in einer Vorschubrichtung verbunden ist und an dem ein Bremsbacken angebracht ist, der ein Rad berührt, um die Drehung des Rades zu bremsen,
eine Verbindungskomponente (14), die mit dem Bremsbackenkopf (13) verbunden ist,
**dadurch gekennzeichnet, dass**:
die Bremseinheit (1, 2) ferner einen Verlängerungsabschnitt (16) umfasst, der mit der Schubstange (12) einstückig ausgebildet ist und mit dem Bremsbackenkopf (13) an einer Position verbunden ist, die von der Verbindung zwischen dem Bremsbackenkopf (13) und der Schubstange (12) entfernt liegt,
die Verbindungskomponente (14) mit dem Bremsbackenkopf (13) an einer Position oberhalb einer Verbindung zwischen dem Bremsbackenkopf (13) und der Schubstange (12) so verbunden ist, dass sie sich um eine Achse drehen kann, die im Wesentlichen parallel zu einer Drehachse verläuft, um die sich der Bremsbackenkopf (13) in Bezug auf die Schubstange (12) dreht,
die Bremseinheit (1, 2) ferner ein Paar Stützarme (15, 45) umfasst, die in einer integrierten Weise so mit dem Bremshauptkörper (11, 41) verbunden sind, dass sie im Wesentlichen horizontal von einer Vorderfläche des Bremshauptkörpers (11, 41) oder von einer Ecke zwischen der Vorderfläche und einer unteren Endfläche des Bremshauptkörpers (11, 41) an einer Position unterhalb der Verbindung zwischen dem Bremsbackenkopf (13) und der Schubstange (12) vorstehen, auf beiden Seiten des Bremsbackenkopfs (13) in Breitenrichtung angeordnet sind, und so mit einem unteren Endabschnitt der Verbindungskomponente (14) verbunden sind, dass die Verbindungskomponente (14) drehbar ist, und
die Stützarme (15, 45) oberhalb der Verbindung zwischen dem Verlängerungsabschnitt (16) und dem Bremsbackenkopf (13) angeordnet sind.

2. Bremseinheit (1, 2) nach Anspruch 1, wobei der Verlängerungsabschnitt (16) mit dem Bremsbackenkopf (13) in einer solchen Weise verbunden ist, dass ein Neigen des Bremsbackenkopfs (13) in Bezug auf die Schubstange (12) durch Reibung verhindert wird.

3. Bremseinheit (1, 2) nach einem der Ansprüche 1 und 2, die ferner umfasst:
einen Nachsteller (25), der so angeordnet ist, dass er sich mit der Schubstange (12) innerhalb des Bremshauptkörpers (11, 41) bewegt, und eine Stützwelle (24) aufweist, die orthogonal zu einer Vorschub- und Rückzugsrichtung der Schubstange (12) verläuft,
eine Rolle (26, 27), die drehbar an der Stützwelle (24) angebracht ist, und
eine keilförmige Komponente (29), die durch einen innerhalb des Bremshauptkörpers (11, 41) angeordneten Antriebsmechanismus in einer Richtung orthogonal zu der Vorschub- und Rückzugsrichtung der Schubstange (12) und zu der Stützwelle (24) bewegt wird, wobei die keilförmige Komponente (29) eine Wirkfläche (29b) aufweist, die in Bezug auf die Bewegungsrichtung der keilförmigen Komponente (29) geneigt ist und, wenn sie sich in Richtung der Rolle (26, 27) bewegt, die Rolle (26, 27) in der Vorschubrichtung der Schubstange (12) vorspannt.

4. Bremseinheit (1) nach Anspruch 3, wobei die Stützwelle (24) so angeordnet ist, dass sie sich vertikal erstreckt, und die Stützarme (15) an einer Position oberhalb des unteren Endes der Stützwelle (24) mit der Verbindungskomponente (14) verbunden sind.

## Revendications

1. Unité de frein (1, 2) comprenant :
une tige de poussée (12) qui est agencée pour se déplacer à l'intérieur et à l'extérieur d'un corps principal de frein (11, 41) ;
une tête de segment (13) qui est raccordée, en rotation, à une partie d'extrémité d'attaque de la tige de poussée (12) dans une direction d'avancement et au niveau de laquelle un segment de frein qui est en contact avec une roue pour freiner la rotation de la roue, est fixé ;
un composant de liaison (14) qui est raccordé à la tête de segment (13), **caractérisée en ce que** :
l'unité de frein (1, 2) comprend en outre :
une partie d'extension (16) qui est intégrée avec la tige de poussée (12) et est raccordée avec la tête de segment (13) à une position à distance de la jonction entre la tête de segment (13) et la tige de poussée (12) ;
le composant de liaison (14) est raccordé à la tête de segment (13) dans une position au-dessus d'une jonction entre la tête de segment (13) et la tige de poussée (12) pour pouvoir tourner autour d'un axe qui est sensiblement parallèle à un axe de rotation autour duquel la tête de segment (13) tourne par rapport à la tige de poussée (12) ;
l'unité de frein (1, 2) comprend en outre une paire de bras de support (15, 45) qui sont raccordés d'une manière solidaire au corps principal de frein (11, 41) pour faire saillie de manière sensiblement horizontale d'une surface avant du corps principal de frein (11, 41), ou d'un coin entre la surface avant et une surface d'extrémité inférieure du corps principal de frein (11, 41) dans une position au-dessous de la jonction entre la tête de segment (13) et la tige de poussée (12), sont prévus des deux côtés de la tête de segment (13) dans le sens de la largeur, et sont raccordés à une partie d'extrémité inférieure du composant de liaison (14) de sorte que le composant de liaison (14) peut tourner ; et
les bras de support (15, 45) sont prévus au-dessus de la jonction entre la partie d'extension (16) et la tête de segment (13).

2. Unité de frein (1, 2) selon la revendication 1, dans laquelle :
la partie d'extension (16) est raccordée à la tête de segment (13) afin de limiter, par friction, l'inclinaison de la tête de segment (13) par rapport à la tige de poussée (12).

3. Unité de frein (1, 2) selon l'une quelconque des revendications 1 ou 2, comprenant en outre :
un dispositif d'ajustement (25) qui est prévu pour se déplacer avec la tige de poussée (12) à l'intérieur du corps principal de frein (11, 41) et a un arbre de support (24) qui est orthogonal aux directions d'avancement et de retrait de la tige de poussée (12) ;
un rouleau (26, 27) fixé en rotation à l'arbre de support (24) ; et
un composant en forme de cale (29) qui est déplacé, par un mécanisme d'entraînement prévu à l'intérieur du corps principal de frein (11, 41), dans une direction orthogonale aux directions d'avancement et de retrait de la tige de poussée (12) et à l'arbre de support (24), dans laquelle :
le composant en forme de cale (29) a une surface de fonctionnement (29b) qui est inclinée par rapport à la direction de déplacement du composant en forme de cale (29) et sollicite, lors du déplacement vers le rouleau (26, 27), le rouleau (26, 27) dans la direction d'avancement de la tige de poussée (12).

4. Unité de frein (1) selon la revendication 3, dans laquelle :
l'arbre de support (24) est prévu pour s'étendre verticalement, et
les bras de support (15) sont raccordés au composant de liaison (14) dans une position au-dessus de l'extrémité inférieure de l'arbre de support (24).
